# EUROPEAN PATENT SPECIFICATION

(11) **EP 3 940 095 B1**
(45) Date of publication and mention of the grant of the patent: **26.04.2023**
(21) Application number: 20186290.1
(22) Date of filing: 16.07.2020
(51) Int. Cl.: C22B 3/02, C22B 3/12, C22B 11/08, C22B 11/12, C22B 11/00

(54) **ALKALINE SULFIDE OXIDATION PROCESS AND DEVICE FOR TREATING REFRACTORY ORE, IN PARTICULAR REFRACTORY GOLD ORE**
VERFAHREN UND VORRICHTUNG ZUR OXIDATION VON ALKALISCHEN SULFIDEN ZUR BEHANDLUNG VON FEUERFESTEM ERZ, INSBESONDERE VON FEUERFESTEM GOLDERZ
PROCÉDÉ ET DISPOSITIF D'OXYDATION DE SULFURE ALCALIN POUR LE TRAITEMENT DE MINERAI RÉFRACTAIRE, EN PARTICULIER DE MINERAI D'OR RÉFRACTAIRE

(43) Date of publication of application: 19.01.2022
(73) Proprietor: S.A. Lhoist Recherche et Développement, 1342 Ottignies-Louvain-la-Neuve (BE)
(72) Inventor: Du Plessis, Chris, 1348 Ottignies-Louvain-la-Neuve (BE); Lambert, Hugues, 1348 Ottignies-Louvain-la-Neuve (BE); Rabieh, Alireza, Salter Point, Western Australia 6152 (AU); Eksteen, Jacobus Johannes, Bull Creek, Western Australia 6149 (AU)
(74) Representative: Calysta NV

(56) References cited:
- EP-A1- 1 171 641
- WO-A1-2006/064350
- WO-A1-2016/081799

## Description

The present invention relates to an alkaline sulfide oxidation process for treating refractory ore particles enriched in a metal to be recovered, i.e., prior to extraction and recovery of such metal, as well as to a device for such alkaline sulfide oxidation process.

Gold and other precious metals are generally extracted from ores by treatment with a cyanide solution which solubilizes the gold and precious metals in the presence of oxygen.

In the cyanide leaching process, solid metallic gold (Au⁰) is oxidized (to Au⁺) by sparged oxygen and is maintained in soluble form as a gold-cyanide complex (Au(CN)²⁻) via the overall reaction illustrated below using sodium cyanide as an example, prior to recovery by adsorption onto activated carbon and subsequent processing:

4 Au + 8 NaCN + O₂ + 2H₂O = 4 Na [Au(CN)₂] + 4 NaOH

Cyanidation leaching of gold needs to occur at alkaline pH conditions, preferably at pH 11, to maintain cyanide in an anionic solution form (CN-) for use in the gold dissolution. At pH levels below 11, and particularly below 9, soluble cyanide is converted to hydrogen cyanide (HCN) that is both ineffective as a leaching agent and prone to evaporation as a toxic gas released from the aqueous phase. It is, therefore, imperative to increase the aqueous mineral slurry pH and maintain it at a safe and effective level, which imposes a reagent consumption demand, most often in the form of quicklime (with active reagent CaO) as the most economical alkalizing reagent. Quicklime is converted to its hydrated form, Ca(OH)₂, when in contact with water and may be utilized in either Ca(OH)₂ or CaO formats.

In some ores, the gold is termed "refractory" to recovery by cyanidation. There are several features that may cause ores to be refractory: (1) The presence of carbonaceous matter that adsorbs (i.e. robs) gold from the pregnant solution (containing cyanide-dissolved gold) thereby reducing recovery, leading to the term "preg-robbing" ore. The most common form of refractory ore is caused by the presence of sulfide minerals, such as pyrite or arsenopyrite. Sulfide refractory ore (or concentrate) is the most commonly encountered refractory ore where fine gold particles are co-contained and often occluded within a matrix of sulfide minerals, most commonly pyrite (FeS₂) or arsenopyrite (FeAsS).

Such gold is not sufficiently liberated and therefore not sufficiently accessible to lixiviants, of which cyanide is the most commonly used. Even if sufficiently liberated the presence of sulfide minerals contributes to uneconomically high cyanide reaction consumption because of the overwhelming unwanted side-reaction of sulfide minerals with cyanide, to form thiocyanate (SCN-) that is less effective as a gold lixiviant.

4 FeS₂ + 8 NaCN + 3 O₂ + 6 H₂O = 8 NaSCN + 4 Fe(OH)₃

Because of the predominance of sulfide refractory ore, the term "refractory" in the rest of this text is meant to refer to sulfide refractory ore (or concentrate) rather than preg-robbing ore.

To solve the aforementioned difficulties, there are several well-known processing options, as pre-treatment before cyanidation, which are available to recover gold from sulfide-refractory ore, most commonly after it has been upgraded to a concentrate via a mineral flotation process [Aylmore et al., 2012. Evaluating process options for treating some refractory ores DOI: 10.13140/2.1.4325.9842 Conference: ALTA 2012 INTERNATIONAL GOLD CONFERENCE, Perth, Australia].

Such available pre-treatment process options are further described in La Brooy et al., Review of gold extraction from ores, Minerals Engineering, [Volume 7, Issue 10, 1994, Pages 1213-1241, https://doi.org/10.1016/0892-6875(94)90114-7], and are carried out either via roasting or hydrometallurgical methods that range from high temperature (up to 250°C), pressure oxidation in autoclaves to bacteria catalyzed oxidation at atmospheric pressure and mild temperature conditions (35 - 45°C in the case of mesophilic bacteria and up to 80°C for archaea systems).

A first option available is a roasting pre-treatment. Roasting is conducted at temperatures of approximately 800°C in the presence of oxygen-containing gas, resulting in the oxidation of sulfides into sulfate solids and gaseous sulfur dioxide. The generation of sulfur dioxide gas is problematic and needs to be collected, generally by conversion into sulfuric acid. The roasting process and capital requirements are further complicated when arsenic is present in the refractory ore. After calcination, the residual gold-containing material, can be subjected to conventional gold cyanidation processes.

Another option available is pressure oxidation. Pressure oxidation is a hydrometallurgical processing method in which refractory concentrate (typically with a P₈₀ 150 µm) is oxidized in an autoclave by the introduction of oxygen gas into aqueous media under elevated pressure and temperature conditions, typically 200°C and 3,100 kPa for up to 60 minutes.

The notation Px represents a diameter expressed in µm, compared to which the size of X% by volume of the particles measured are less than or equal to this diameter. For example, P₈₀ 150 µm means that 80% by volume of the particles have a diameter smaller than or equal to 150 µm. The particle size distribution of a sample can be determined by different methods, known in the art.

The reaction below illustrates pyrite oxidation (by way of example) as is typically achieved in an autoclave, generating hematite and sulfuric acid.

4 FeS₂ + 15 O₂ + 8 H₂O = 2 Fe₂O₃ + 8 H₂SO₄

A portion of the iron contained in pyrite remains in solution as ferric iron sulfate because of the high acid levels preventing all ferric iron precipitating.

4 FeS₂ + 15 O₂ + 2 H₂O = 4 Fe³⁺ + 6 SO₄²⁻ + 2 H₂SO₄

A further available option is bacterial bio-oxidation. Bacterial bio-oxidation is a hydrometallurgical processing method in which refractory concentrate (typically P₈₀ < 150 µm) is oxidized in aqueous media at atmospheric pressure and mild temperature 35 - 45°C, where sulfide mineral oxidation is catalyzed by iron- and sulfur-oxidizing bacteria in a cascade of reactors with a total residence time of approximately 4 days. While bacteria cope well with impurities such as arsenic, they have a low tolerance for chloride (above approximately 1g/dm³), thereby prohibiting the use of seawater (chloride content of approximately 17g/dm³). Similar pyrite oxidation reactions occur during biooxidation as earlier illustrated for pressure oxidation, but the ambient pressure conditions of biooxidation result in iron precipitating as jarosite rather than hematite.

Alternatively, there also exist ultra-fine grinding methods (P₈₀ 25 µm), such as the Albion process, disclosed in EP 1 171 641. According to this document, ultra-fine grinding methods are employed to improve the leaching rate under atmospheric conditions in the presence of oxygen, but at the expense of increased grinding costs. In this method, all of the material to be treated is subjected to grinding to reduce mineral particle size, prior to leaching in alkaline conditions. Unfortunately, this process is energy intensive. As disclosed in EP 1 171 641, the alkaline leaching of refractory sulfide and/or carbonaceous materials can only be successfully achieved by careful selection of the particle size of the material to be leached." A similar teaching is to be found in WO006/064350 which consequently shows the same disadvantages. WO2006/064350 A1 discloses a process for obtaining metal values, typically base metals, platinum or gold from feed material. In a first step of the process, feed material containing metal values is ground to a particle size d90 of 100 µm or less to form an ultra fine pulp, In a second step of the process, the ultra fine ground pulp from the first step is oxygenated by pumping it in multiple passes through an in.line high shear static oxygenation device, while recirculating it on a tank or any other vessel.

A more recent alternative is an acidic leaching process by FLSmidt called the Rapid Ore Leaching process (as disclosed in WO 2016/100981) which makes use of alternating grinding (stirred media reactors) and leaching, in acid environments for base metal recovery.

Leaching inside a mill was also proposed in Patent CN1228480 which teaches a process in which milling and oxidation occurs simultaneously in the same reactor and does not separate the oxidation step from the surface attritioning/milling. The problem with such an approach is that the oxidation and milling cannot be independently controlled.

Several of the above hydrometallurgical methods, such as FLSmidt's Rapid Ore Leaching process, will yield acidic conditions in the bulk of the slurry.

Acid generation is a consequence of most aqueous pyrite oxidation processes and has three important negative consequences:
1. The combination of acidic and oxidative process conditions (dissolved oxygen and ferric iron) is particularly corrosive, thus requiring special materials of construction that, in turn, impose significant capital equipment costs for the pressurized reactor vessels. The corrosive conditions are further exacerbated by the use of chloride-containing water as is contained in seawater. These features increase capital equipment complexity and costs.
2. The generation of acid during hydrometallurgical sulfide mineral oxidation also causes significant dissolution of gangue minerals contained in the ore or concentrate. Dissolved gangue elements such as Fe, Al, Mn, Mg and others, require precipitation for removal from solution prior to process solution re-use or disposal. These gangue element precipitation reactions also typically require a combination of calcium carbonate (effective at pH levels < 4.5 for Fe and Al removal) and lime (effective at pH levels up to 12 for precipitation of elements that precipitate as hydroxides at elevated pH levels). The precipitation reagents required, incur significant costs.
3. Acidic conditions are contrary to the alkaline conditions required in the subsequent gold cyanidation leaching process. The oxidized slurry therefore requires the addition of large quantities of base reagents to render the pH conducive to cyanidation leaching of gold.

As it can be seen from industrial practice, the available hydrometallurgical process options present problems of acid generation. To overcome these challenges, alkaline sulfide mineral oxidation methods have been proposed, where the absence of acid would avoid the problems of corrosion and gangue mineral dissolution [Bahkta et al., 1989. Alkaline oxidative leaching of gold-bearing arsenopyrite ores. Report of investigations (United States of America Bureau of Mines): 9258. Supt. Docs no: I28.23.:9258]. Alkaline reagents that have previously been considered for this purpose have included, amongst others, NaOH, Na₂CO₃, NaOCI and KOH. Unfortunately, the use of these reagents, however, poses a number of problems:
1. The monovalent cations (such as Na⁺) associated with these reagents typically remain soluble and are not readily removed from solution circuits by precipitation reactions. This, in turn, causes secondary environmental, regulatory or license-to-operate issues because of process circuit discharge and seepage into underground- or open water sources.
2. These reagents are relatively expensive.

Further, Bidari et al. studied the alkaline oxidation of pyrite in the presence of calcite and dolomite and highlighted the formation of a surface layer on the pyrite containing Ca (in the case of calcite) and Mg (in the case of dolomite) on the pyrite surface, which ascribed to be the cause of the slowdown in pyrite leaching rate. Pyrite alkaline oxidation rate decreased in the presence of both calcite and dolomite, while a more detrimental effect was observed in the case of calcite (see *"*Pyrite oxidation in the presence of calcite and dolomite: Alkaline leaching, chemical modelling and surface characterization" in Trans. Nonferrous Met. Soc. China 28(2018) 1433-1443).

Caldeira et al. studied the alkaline oxidation of pyrite with different alkaline solutions to characterize the nature of a product layer formed at the surface of the oxidized pyrite. A comparison between different alkaline reagents was performed, such as with sodium or calcium hydroxide and sodium carbonate. Caldeira et al., 2003 reported that a "... very low oxidation of pyrite was obtained in the presence of lime" compared to sodium carbonate which does not result in gypsum formation [C.L Caldeira, V.S.T Ciminelli, A Dias, K Osseo-Asare, Pyrite oxidation in alkaline solutions: nature of the product layer, International Journal of Mineral Processing, Volume 72, Issues 1-4, 2003, Pages 373-386].

Alkaline oxidation conditions have advantages compared to acidic conditions, but has a number of drawbacks: (1) alkali reagents such as sodium hydroxide, ammonium hydroxide or potassium hydroxide are expensive reagents and pose environmental risks because of the inability to readily remove the associated cation from processing circuits, while (2) calcium based alkali reagents have been demonstrated to cause passivation of pyrite and thereby work counter to the objective of oxidizing refractory ore.

There is, therefore, a need to provide oxidation of sulfide minerals for recovering metal in the sulfide mineral having the minimal impact on environment, either in terms of impact or treatment of disposal, further allowing the use of diverse source of water and where the capital equipment costs remain reasonable.

It is an objective of the present invention to compensate at least partly for these drawbacks by providing an alkaline oxidation process of refractory ore particles for recovering metal which are entrapped in or co-occurring such sulfide minerals which involve less expensive alkaline agent, allows the use of diversified sources of water and where the capital equipment costs and energy consumption remains at an acceptable level.

The invention is defined in accordance with the claims.

According to the present invention and against all expectations, it has been possible to perform efficiently a lime based alkaline oxidation step of refractory sulfide ore particles for extracting a metal of interest. While the literature was strongly teaching away from the use of an alkaline calcium reagent compound because the surface coating effect of lime creating a passivation layer that prevents further oxidation of the refractory ore, the yield of the oxidation process according to the present invention was comparable to other acid or alkaline oxidation leaching but more economical and without the drawbacks of the prior art.

Indeed, US Patent 2016/0258038A1 states that "...leaching of iron sulfide materials with lime has been unsuccessful in that leaching is incomplete and subsequent precious metal recovery is low. For example, an earlier study of alkaline oxidation of pyrite for gold recovery using lime achieved only 30 to 40% gold recovery which offered little improvement over direct cyanidation of the pyrite. This is believed to be due to passivation of the mineral by precipitation of a gypsum/iron oxide layer."

Further, in copper sulfide mineral processing, pyrite occurs as an unwanted sulfide mineral that needs to be rejected during processing. This is typically achieved by inducing surface coating effects partly attributed to lime. For example Hu et al. 2000, notes that: "Well known phenomenon of the depression of pyrite by lime is attributed to the surface formation of Ca(OH)₂, CaSO₄ and Fe(OH)₃ as determined by XPS analysis" [Hu et al., J. D. (2000). Surface chemistry of activation of lime-depressed pyrite in flotation. Transactions of Nonferrous Metals Society of China (English Edition), 10(6), 798-803.]

Pyrite oxidation is the main cause of acid mine drainage (also called acid rock drainage). Acid mine drainage prevention therefore focusses on preventing the oxidation of pyrite. An article by Qian 2017 states that: "treatment with lime-saturated water was found to be of paramount importance for maintaining long-term circum-neutral pH, favourable for the formation and preservation of the pyrite surface passivating layer and reduced acid generation rate" [Qian, Gujie & Schumann, Russell & Li, Jun & Short, Michael & Fan, Rong & Li, Yubiao & Kawashima, Nobuyuki & Zhou, Yan & St. C. Smart, Roger & R. Gerson, Andrea. (2017). Strategies for Reduced Acid and Metalliferous Drainage by Pyrite Surface Passivation. Minerals. 7. 1-15. 10.3390/min7030042.]

According to the present invention, it has been identified that it is possible to use lime during alkaline oxidation of refractory ore particles enriched in a metal to be recovered after at least 3 stages of alkaline oxidation with intermittent mechanical activation. During each alkaline oxidation step, a slurry is formed in which the refractory ore particles are oxidized. The slurry is further mechanically activated to remove or alter the passivation layer around the refractory ore particles in an attrition step or milling step. The attritioning step or milling step is performed during a relatively short residence time to only remove or alter the passivation layer and to limit the energy requirements for this mechanical activation step. Further, the mechanically activated slurry is again submitted to a new and second stage of alkaline oxidation mechanical activation step. During the alkaline oxidation step of the second stage, the remaining portion of the refractory ore particles is further surface-oxidized and become coated with a new passivation layer (forming a second slurry). The new passivation layer is further removed or altered during a subsequent attrition or milling step of the second slurry and forms a second mechanically activated slurry. The second mechanically activated slurry is further submitted to a third stage of alkaline oxidation step and mechanical activation step. During the alkaline oxidation step of the third stage, the remaining portion of the refractory ore particles is further oxidized in surface and surrounded with a new passivation layer (forming a third slurry). The new passivation layer is further removed or alter during a subsequent attrition or milling step of the third slurry and forms a third mechanically activated slurry. The third mechanically activated slurry is either collected for further processing or submitted to a next alkaline oxidation step, possibly by being beforehand returned to (so looping with) the previous alkaline oxidation step through the third mechanical activation step.

The number of stages is at least three and can be further increased depending on the particle size of the refractory ore particles. In addition, the residence time for each alkaline oxidation step can be the same or different from one to each other and will be defined taking into account the constraints of the process.

An unexpected finding of the present invention, was that refractory ore particles could be oxidized to a substantial extent with the use of lime as alkaline reagent under oxidation conditions that are otherwise known for generating a passivation layer, normally considered as an obstacle to oxidation. This was achieved by facilitating oxidation under alkaline conditions using, a lime reagent, and subsequent removal/alteration of the surface passivation layer to further generate a new "active" surface and accordingly, reduce the main diameter of each refractory ore particles step by step by the stages in the process according to the present invention. According to the present invention,said refractory ore is gold refractory sulfide ore or concentrate such as gold containing pyrite ore or concentrate, gold containing arsenopyrite ore or concentrate, copper sulfide ore or concentrate, nickel sulfide ore or concentrate, zinc sulfide ore or concentrate or cobalt sulfide ore or concentrate and combined metal sulfide ore or concentrate such as low grade copper-gold sulfide ore or concentrate.

In addition, according to the present invention, said added oxidizing agent is an oxidizing liquid, an oxidizing powder or an oxidizing gas, such as oxygen, ozone, and their mixture

Further, in a particular embodiment, said calcium hydroxide of said alkaline liquid phase is obtained by wherein said calcium hydroxide of said alkaline liquid phase is obtained by one or more addition of dry quicklime CaO, hydrated lime Ca(OH)₂, a milk of lime also known as slaked lime being a slurry of Ca(OH)₂ and water, said one or more addition being chosen amongst an addition upstream one n^{th} reactor, in one n^{th}reactor, upstream a x^{th} communition device, in a x^{th} mechanical activation means or combination thereof

More specifically, in the process according to the present invention, each intermediate alkaline oxidation step is fed by a previous alkaline oxidation step, optionally via a mechanical activation step.

For example, in one advantageous embodiment of the process according to the present invention, x = n and each n^{th} alkaline oxidation step of said series of n alkaline oxidation step is followed by a x^{th} mechanical activation step of said series of x mechanical activation steps (with the number of the series x^{th} being normally equal to the number of the series n^{th} but not mandatorily), each n^{th} (from second), i.e. each amongst the at least one intermediate alkaline oxidation step and last alkaline oxidation step being fed by a x^{th} mechanically activated slurry where x = n - 1.

In another exemplary embodiment according to the present invention, x = n and each n^{th} alkaline oxidation step of said series of n alkaline oxidation step is followed by a x^{th} mechanical activation step of said series of x mechanical activation steps (with the number of the series x^{th} being normally equal to the number of the series n^{th} but not mandatorily), each n^{th} (from second), i.e. each amongst the at least one intermediate alkaline oxidation step and last alkaline oxidation step being fed by a (n - 1)^{th} slurry from a (n - 1)^{th} agitated reactor to which a (n- 1)^{th} mechanically activated slurry is returned.

In a further exemplary embodiment according to the process of the present invention, x is different from n, hence lower than n. In this exemplary embodiment, the process comprises several intermediate alkaline oxidation steps and some intermediate alkaline oxidation steps of said series of n alkaline oxidation step are followed by a mechanical activation step. In one sub-variant of this exemplary embodiment, each n^{th} intermediate alkaline oxidation step forming a n^{th} slurry is fed by a (n-1)^{th} slurry from the (n- 1)^{th} agitated reactor, optionally subsequently mechanically activated. In another sub-variant of this exemplary embodiment, each n^{th} alkaline oxidation step forming a n^{th} slurry is fed from a (n - 1)^{th} agitated reactor optionally to which a x^{th} mechanically activated slurry with x < (n - 1) is returned.

According to the present invention, it is foreseen that mechanical activation is achieved by at least one comminution device, i.e., can be made by a single comminution device or two, three or more sequentially ordered comminution devices in parallel and/or in series, between two sequential alkaline oxidation steps.

In an advantageous embodiment of the process according to the present invention, at least one alkaline oxidation step, preferably more than one alkaline oxidation step and more preferably each alkaline oxidation step of said series of n alkaline oxidation steps is performed at atmospheric pressure.

In another advantageous embodiment of the process according to the present invention, at least one alkaline oxidation step, preferably more than one alkaline oxidation step and more preferably each alkaline oxidation step of said series of n alkaline oxidation steps is performed at a temperature comprised between 70 and 100°C, preferably between 80 and 95°C, more preferably between 80°C and 90°C.

In a further particular embodiment of the process according to the present invention, at least one alkaline oxidation step, preferably more than one alkaline oxidation step and more preferably each alkaline oxidation step of said series of n alkaline oxidation steps is performed with a dissolved oxygen content comprised between 1 and 30 mg/dm³, preferably between 5 and 25 mg/dm³, more preferably higher than 10 mg/dm³ and in particular between 10 and 20 mg/dm³ of liquid phase.

Preferably, in the process according to the present invention, at least one alkaline oxidation step, preferably more than one alkaline oxidation step and more preferably each alkaline oxidation step of said series of n alkaline oxidation steps is performed at a pH comprised between 10 and 12.5, preferably comprised between 10 and 12 and in particular between 10.5 and 11.5, said pH being controlled with a controlled lime addition of said alkaline agent.

More preferably, in the process according to the present invention, at least one alkaline oxidation step, preferably more than one alkaline oxidation step and more preferably each alkaline oxidation step of said series of n alkaline oxidation steps is performed with solid content in the stirred reactor comprised between 10 and 70 wt%, preferably, between 20 and 70 wt%, more preferably between 35 and 70 wt%, more particularly between 40 and 65 wt% with respect to the total weight contained in said stirred reactor.

In particular, in the process according to the present invention, at least one of mechanical step of said series of x mechanical activation step is performed in a vertical mill, a vertical stirred mill, a horizontal mill, an attritor, a stirred ball mill or a horizontal stirred mill.

Advantageously, in the process according to the present invention, said refractory ore particles fed to said first alkaline oxidation step is beforehand crushed and grinded, for example milled typically down to a P₈₀ of 200 µm, preferably down to a P₈₀ of 150 µm forming a crushed and ground refractory ore particles.

Preferably, in the process according to the present invention, said crushed and ground refractory ore particles are subjected to mineral flotation to produce a concentrate of refractory particles fed to said first alkaline oxidation step.

Other embodiments of the process according to the present invention are mentioned in the appended claims.

The process according to the present invention may be carried out in a device for alkaline sulfide oxidation of refractory ore particles enriched in a metal to be recovered comprising:
- a series of n agitated reactors for alkaline oxidation where n is an integer comprised between 3 and 10, preferably between 4 and 8, more preferably between 5 and 7,
- a series of x mechanical activation means where x is an integer equal or lower than n and comprised between 3 and 10, preferably between 4 and 8, more preferably between 5 and 7, and
- a collection means for feeding a process for recovering said metal,
said device further comprising a lime agent feeding means connected to at least one agitated reactor or to at least one mechanical activation means or both.

By the wording "said device further comprising a lime agent feeding means connected to at least one agitated reactor or to at least one mechanical activation means or both", it is meant that lime can be fed to all or any number of the alkaline oxidation reactors and/or mechanical activation reactors.

Advantageously, in such a device, at least one agitated reactor, preferably at least 3 agitated reactors, more preferably each agitated reactor, comprises sparging means for feeding an oxidizing gas.

In a particular embodiment of the device, said lime feeding means comprises a further stirred vessel to suspend calcium hydroxide powder in a liquid phase connected to a lime agent pump.

In a particular embodiment of the device, at least one intermediate n^{th} agitated reactor of said series of n agitated reactors is connected on one side to a previous (n-1)^{th} agitated reactor, optionally via a mechanical activation means, and on the other side to a following x^{th} mechanical activation means of said series of x mechanical activation means.

In another particular embodiment of the device, at least one intermediate n^{th} agitated reactor of said series of n agitated reactor is connected on one side to a previous (n-1)^{th} agitated reactor, optionally via a mechanical activation means and on the other side to a following (n+1)^{th} agitated reactor of said series of n agitated reactors.

For example, in one exemplary embodiment of the device, x = n and each n^{th} (from second), i.e. each amongst the at least one intermediate agitated reactor and last agitated reactor of said series of n agitated reactor is connected to a x^{th} mechanical activation means of said series of x mechanical activation means for feeding the x^{th} mechanical activation means with a n^{th} slurry of surface oxidized refractory ore particles, said x^{th} mechanical activation means being connected to a (n + 1)^{th} agitated reactor for feeding said (n + 1)^{th} agitated reactor with a x^{th} mechanically activated slurry.

In another exemplary embodiment of the device, x = n and each n^{th} (from second), i.e. each amongst the at least one intermediate agitated reactor and last agitated reactor of said series of n agitated reactor is connected to a x^{th} mechanical activation means of said series of x mechanical activation means for feeding the x^{th} mechanical activation means with a n^{th} slurry of surface oxidized refractory ore particles, said x^{th} mechanical activation means being connected (inwards and outwards) to said n^{th} agitated reactor for returning (looping) said x^{th} mechanically activated slurry to said n^{th} agitated reactor, the (n + 1)^{th} agitated reactor being connected to said n^{th} agitated reactor to be fed by a flow from said n^{th} agitated reactor.

In yet another exemplary embodiment of the device, x is different from n, hence lower than n. In this exemplary embodiment, the process comprises several intermediate agitated reactors and some intermediate agitated reactors of said series of n agitated reactors are followed by a mechanical activation step. In one sub-variant of this exemplary embodiment, each n^{th} intermediate agitated reactor forming a n^{th} slurry is connected to a (n-1)^{th} agitated reactor and fed by a flow from said (n- 1)^{th} agitated reactor, optionally subsequently mechanically activated. In another sub-variant of this exemplary embodiment, each n^{th} intermediate agitated reactor forming a n^{th} slurry is fed from a (n - 1)^{th} agitated reactor optionally to which a x^{th} mechanically activated slurry with x < (n - 1) is returned.

It may be foreseen that a mechanical activation means is made by at least one comminution device, i.e., can be made by a single comminution device or two, three or more sequentially ordered comminution devices in parallel and/or in series, between two sequential alkaline oxidation steps.

Preferably, in the device, at least one agitated reactor, preferably each agitated reactor of said series of n agitated reactor comprises heating means.

More particularly, in the device, at least one mechanical activation means of said series of x mechanical activation means is a vertical mill, a vertical stirred mill, a horizontal mill, an attritor, a stirred ball mill or a horizontal stirred mill.

Other characteristics and advantages of the present invention will be derived from the non-limitative following description, and by making reference to the drawings where.
Figure 1 is a schematic view of the status of a refractory ore material particle during one stage of alkaline oxidation and mechanical activation.
Figure 2 is a flow chart of one embodiment of the process according to the present invention, showing the device to carry out such process.
Figure 3 is a flow chart of another embodiment of the process according to the present invention, showing the device to carry out such process.
Figure 4 is a flow chart of yet another embodiment of the process according to the present invention, showing the device to carry out such process.
Figure 5 is a flow chart of a further embodiment of the process according to the present invention, showing the device to carry out such process.
Figure 6 is a flow chart of a variant embodiment of the process according to the present invention, showing the device to carry out such process.
Figure 7 is a graph showing the extent of gold extraction by cyanidation leaching (or other target method) as a function of extent of pyrite oxidation.

In the drawings, the same reference numbers have been allocated to the same or analogue element.

The present invention relates to an alkaline sulfide oxidation process for treating refractory ore particles enriched in a metal to be recovered.

The refractory ore particles are submitted to at least 3 stages, preferably 4, 5, 6, 7 or even 8 or up to 10 stages, in which refractory ore particles are oxidized in surface in an alkaline oxidation step in alkaline liquid phase containing calcium hydroxide for forming an alkaline slurry containing surface oxidized refractory ore particles. The slurry is further mechanically activated to remove at least partly a surface layer from the surface oxidized refractory ore particles. The surface layer contains oxidized matter. The mechanical activation forms a slurry which is called a mechanically activated slurry and which contains oxidized matter, refractory sulfide ore or concentrate particles, alkaline liquid phase and liberated metal to be recovered for further processing.

The product of the process described earlier is a slurry containing oxidized matter, alkaline liquid phase and liberated metal to be recovered for further processing.

The process according to the present invention is contrary to the conventional industrial practice of using lime-based reagents, where it is generally used to retard sulfide mineral oxidation. The present invention is based on the use of a lime-based reagent to induce alkaline conditions for sulfide mineral oxidation by explicitly overcoming the gypsum and iron oxide coating effect, thereby facilitating high rates of sulfide mineral oxidation.

Refractory ore is crushed and milled typically down to a P₈₀ of 150 µm. This ore can either be fed directly into the first alkaline oxidation reactor, or can first be subjected to a mineral flotation process and thereby upgraded to a concentrate. The upgraded concentrate, containing the metal and sulfide mineral of interest, is then be fed into the first alkaline agitated oxidation reactor. The present invention is herein illustrated with gold refractory ore, without being limited thereto. Other precious metal refractory ore can also be treated in the process according to the present invention, but also base metal sulfide ore, such as zinc sulfide ore, copper sulfide ore, cobalt sulfide ore, nickel sulfide ore or combined metal sulfide ore such as low grade copper-gold sulfide ores.

In refractory sulfide gold ore, the main sulfide minerals in the concentrate are most typically pyrite or arsenopyrite. Lime as dry quicklime, dry hydrated lime (also known as slaked lime or dry slaked lime), or a milk of lime a slurry of Ca(OH)₂ particles and water) or a paste of lime may be added at least one agitated reactor and/or to at least one mechanical activation means, preferably to at least 3 agitated reactors and/or to at least 3 mechanical activation means, more preferably to each agitated reactors and/or to at least each mechanical activation means. Lime (in any form) is added to as many of the process units (agitated reactors and/or mechanical activation means) as is required to maintain the pH throughout the processing circuit at the target pH setpoint. Practically, if the lime is added to each oxidation reactor, to maintain the pH at the setpoint, the lime consumption can be used as an indicator of the extent of mineral oxidation therefore it could be a very important parameter to monitor the performance of the process circuit.

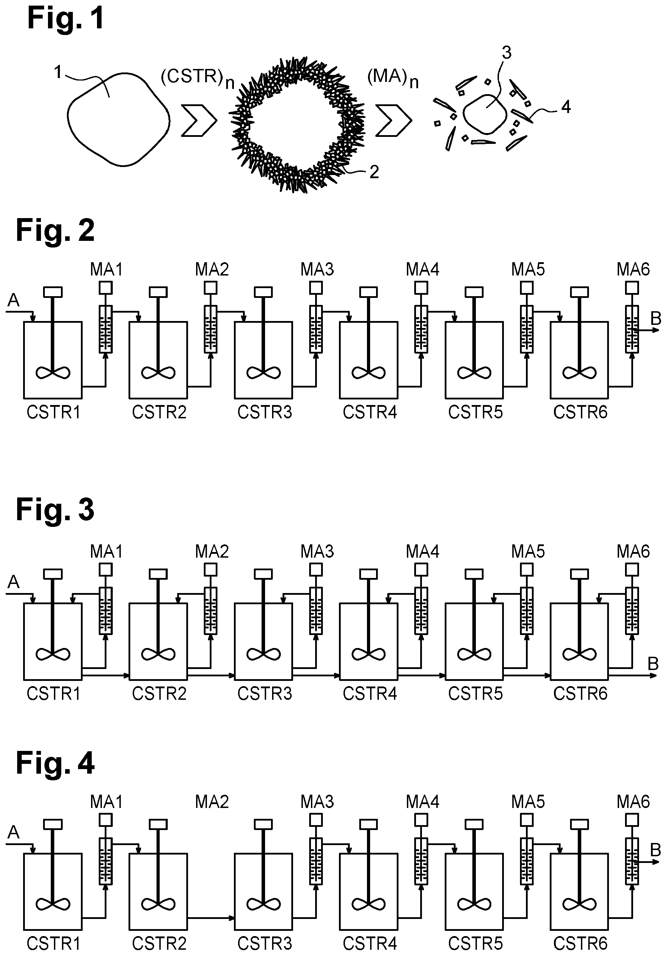

It is also possible that the lime is added to each stage of the process by adding it to the attritioner feed. In this way the mechanical activation means acts to mill and disperse added lime. The sulfide mineral concentrate (1) is subjected to a combination of alkaline oxidation ((CSTR)ₙ) and surface attritioning ((MA)ₙ) in order to reduce the impact of surface coating (2) and passivation effects, illustrated in figure 1. The surface layer (2) or passivation layer (2) contains ferric iron hydroxide (Fe(OH)₃) and gypsum (CaSO₄.2 H₂O). The surface attritioning forms a slurry which is called a mechanically activated slurry and which contains oxidized matter (4), refractory sulfide ore (3) or concentrate particles, alkaline liquid phase and liberated metal to be recovered.

The sulfide mineral concentrate is subjected to an elevated temperature alkaline oxidation process into which oxygen gas (preferably with an oxygen content greater than 95% v/v) is sparged and lime is added.

A combination of surface attritioning (mechanical activation) and alkaline oxidation, prior to gold leaching, is thereby induced. The rationale for this approach is to limit milling/grinding to achieve mineral surface attritioning (also called herein mechanical activation and encompassing both mechanical activation or attritioning) in a stirred media reactor sufficient to disrupt/alter or remove gypsum and iron oxide surface coating and passivation. In effect, the alkaline oxidation process is applied to mineral surfaces and milling (mechanical activation) is only used to expose fresh mineral surfaces ("active" layer) to sustain elevated mineral oxidation rates, as illustrated in figure 1. The process of mechanically activation also results in a high degree of strain being introduced into the sulphide mineral lattice, increasing the number of grain boundary fractures and lattice defects in the mineral. The introduction of strain lowers the activation energy for the oxidation of the sulfides and enables oxidation under atmospheric conditions. The rate of oxidation is also enhanced, due to the increased mineral surface area.

The process according to the present invention can occur in a number of different circuit configurations, with the basic feature of alternating alkaline oxidation (shown in CSTR reactors below) with inter-stage surface attritioning (also called mechanical activation, MA). The number of stages can range from 3 - 10, preferably from 3 to 8. More preferably from 4 to 7.

As it can be seen from the figure 2 to 6, alkaline sulfide oxidation process for treating refractory ore particles enriched in said metal to be collected comprises said at least 3 stages comprising:
- A series of n alkaline oxidation steps in a series of n agitated reactors (CSTRs) forming n alkaline slurries, where n is an integer comprised between 3 and 10, preferably between 4 and 8, more preferably between 5 and 7,
- A series of x mechanical activation steps in a series of x mechanical activation means (MA), each mechanical activation step being a mechanical activation of a n^{th} alkaline slurry, where x is an integer, equal to or lower than n, and comprised between 3 and 10, preferably between 4 and 8, more preferably between 5 and 7.

The series of n alkaline oxidation steps comprises at least:
- A first alkaline oxidation step where said refractory ore particles enriched in a metal to be recovered is fed into an agitated reactor and forming a first alkaline slurry,
- At least one intermediate alkaline oxidation step fed with one alkaline slurry from a previous alkaline oxidation step,
- A last alkaline oxidation step being said n^{th} alkaline oxidation step fed with one alkaline slurry from a previous alkaline oxidation step,
said series of x mechanical activation steps comprises at least:
- A first mechanical activation step of said first alkaline slurry in a first mechanical activation means to form a first mechanically activated slurry,
- At least one intermediate mechanical activation step of a n^{th} alkaline slurry with said n^{th} alkaline slurry being comprised between a 2^{nd} alkaline slurry and a (x-1)^{th} alkaline slurry in a y^{th} mechanical activation means to form a y^{th} mechanically activated slurry,
- A last mechanical activation step of said last alkaline slurry being said x^{th} mechanical activation step in a x^{th} mechanical activation means to form a x^{th} mechanically activated slurry.

A first embodiment is illustrated in figure 2. As it can be seen, the series of n reactor comprises 6 agitated reactors. Each agitated reactor (CSTR 1 to CSTR 6) is followed by one mechanical activation means (MA 1 to MA 6). In this embodiment of figure 2, x = n = 6. The first agitated reactor is fed with refractory ore particles, having preferably a P₈₀ lower than 150 µm. Each alkaline oxidation step of said series of n alkaline oxidation step is followed by a mechanical activation step of said series of x mechanical activation steps. Each n^{th} alkaline oxidation step forms a n^{th} slurry of surface oxidized refractory ore particles. Each n^{th} alkaline oxidation step from n = 2 is fed by a x^{th} mechanically activated slurry where x = n - 1. Each x^{th} mechanical activation step forms a x^{th} mechanically activated slurry.

In other words, the first alkaline oxidation step in agitated reactor CSTR 1 forms a first slurry of surface oxidized refractory ore particles and is followed by a first mechanical activation step in a mechanical activation means MA1. The first mechanical activation forms a first mechanically activated slurry. The first alkaline oxidation step is fed by refractory ore particles.

The second alkaline oxidation step in agitated reactor CSTR 2 forms a second slurry of surface oxidized refractory ore particles and is followed by a second mechanical activation step in a mechanical activation means MA 2. The second mechanical activation forms a second mechanically activated slurry. The second alkaline oxidation step is fed by the first mechanically activated slurry.

The third alkaline oxidation step in agitated reactor CSTR 3 forms a third slurry of surface oxidized refractory ore particles and is followed by a third mechanical activation step in a mechanical activation means MA 3. The third mechanical activation forms a third mechanically activated slurry. The third alkaline oxidation step is fed by the second mechanically activated slurry.

The fourth alkaline oxidation step in agitated reactor CSTR 4 forms a fourth slurry of surface oxidized refractory ore particles and is followed by a fourth mechanical activation step in a mechanical activation means MA 4. The fourth mechanical activation forms a fourth mechanically activated slurry. The fourth alkaline oxidation step is fed by the third mechanically activated slurry.

The fifth alkaline oxidation step in agitated reactor CSTR 5 forms a fifth slurry of surface oxidized refractory ore particles and is followed by a fifth mechanical activation step in a mechanical activation means MA 5. The fifth mechanical activation forms a fifth mechanically activated slurry. The fifth alkaline oxidation step is fed by the fourth mechanically activated slurry.

The sixth alkaline oxidation step in agitated reactor CSTR 6 forms a sixth slurry of surface oxidized refractory ore particles and is followed by a sixth mechanical activation step in a mechanical activation means MA 6. The sixth mechanical activation forms a sixth mechanically activated slurry. The sixth alkaline oxidation step is fed by the fifth mechanically activated slurry.

In another alternative arrangement as illustrated in figure 3, the attritioners or mechanical activation means (MA 1 to MA 6) will not be between the alkaline oxidation stages (CSTR 1 to CSTR 6), but rather in parallel with the oxidation stages, forming an internal loop between the alkaline oxidation reactor and the mechanical activation reactor.

The equipment arrangement would have preferably 4 to 6 reactors for alkaline oxidation, with 4 to 6 attritioners "next to" the reactors.

In this case, the slurry is drawn from a n^{th} agitated reactor, sent through the attritioner, which then returns the slurry to the same n^{th} reactor.

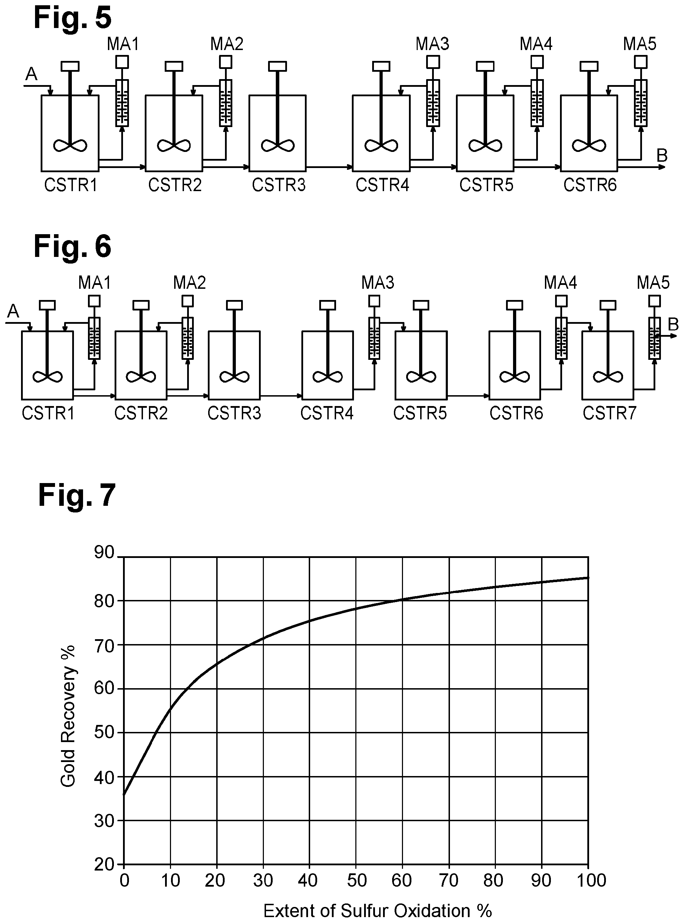

This arrangement offers the added benefit that the circuit may continue to operate even if an attritioner needs to be taken offline for maintenance or replacement. It also provides more flexibility to alter the relative extent of attritioning vs oxidation, by adjusting the return (to the same oxidation reactor) versus the forwarding (to the next oxidation reactor in the series) flow rate. Also, not all alkaline oxidation stages may require a mechanical activation step, therefore some mechanical activation steps can be omitted (see figure 5).

Indeed, as illustrated in figure 3, in this arrangement, the number of agitated reactors in said series is preferably 6 and the number of mechanical activation means in said series is also preferably 6.

Accordingly, x = n = 6. Each alkaline oxidation step of said series of n alkaline oxidation step is followed by a mechanical activation step of said series of x mechanical activation steps. Each n^{th} alkaline oxidation step forms a n^{th} slurry of surface oxidized refractory ore particles. The n^{th} alkaline oxidation step is fed by a (n - 1)^{th} slurry from a (n - 1)^{th} agitated reactor to which a (n- 1) ^{th} mechanically activated slurry is returned.

In other words, the first alkaline oxidation step in agitated reactor CSTR 1 forms a first slurry of surface oxidized refractory ore particles and is followed by a first mechanical activation step in a mechanical activation means MA1. The first mechanical activation forms a first mechanically activated slurry. The first alkaline oxidation step is fed by refractory ore particles and by said first mechanically activated slurry.

The second alkaline oxidation step in agitated reactor CSTR 2 forms a second slurry of surface oxidized refractory ore particles and is followed by a second mechanical activation step in a mechanical activation means MA 2. The second mechanical activation forms a second mechanically activated slurry. The second alkaline oxidation step is fed by the first slurry from the first agitated reactor and by the second mechanically activated slurry.

The third alkaline oxidation step in agitated reactor CSTR 3 forms a third slurry of surface oxidized refractory ore particles and is followed by a third mechanical activation step in a mechanical activation means MA 3. The third mechanical activation forms a third mechanically activated slurry. The third alkaline oxidation step is fed by the second slurry from the second agitated reactor and by the third mechanically activated slurry.

The fourth alkaline oxidation step in agitated reactor CSTR 4 forms a fourth slurry of surface oxidized refractory ore particles and is followed by a fourth mechanical activation step in a mechanical activation means MA 4. The fourth mechanical activation forms a fourth mechanically activated slurry. The fourth alkaline oxidation step is fed by the third slurry from the third agitated reactor and by the fourth mechanically activated slurry.

The fifth alkaline oxidation step in agitated reactor CSTR 5 forms a fifth slurry of surface oxidized refractory ore particles and is followed by a fifth mechanical activation step in a mechanical activation means MA 5. The fifth mechanical activation forms a fifth mechanically activated slurry. The fifth alkaline oxidation step is fed by the fourth slurry from the fourth agitated reactor and by the fifth mechanically activated slurry.

The sixth alkaline oxidation step in agitated reactor CSTR 6 forms a sixth slurry of surface oxidized refractory ore particles and is followed by a sixth mechanical activation step in a mechanical activation means MA 6. The sixth mechanical activation forms a sixth mechanically activated slurry. The sixth alkaline oxidation step is fed by the fifth slurry from the fifth agitated reactor and by the sixth mechanically activated slurry.

Figure 4 illustrates a variant embodiment compared to figure 2, where the number of agitated reactors in said series of n agitated reactor is not the same as the number of mechanical activation means of said series of x mechanical activation means. This arrangement can be carried out as such or at any location in the series and can be carried out as illustrated by construction or because one mechanical activation means needs to be maintained. In this case, a by-pass is realized between two consecutive agitated reactors.

As it can be seen, in this arrangement, x is different from n, hence lower than n. x = 5 while n = 6. Some alkaline oxidation step of said series of n alkaline oxidation step are followed by a mechanical activation step of said series of x mechanical activation steps, but not each alkaline oxidation steps. Each n^{th} alkaline oxidation step forms a n^{th} slurry of surface oxidized refractory ore particles and is fed by a (n-1)^{th} slurry from the (n- 1) ^{th} agitated reactor, optionally subsequently mechanically activated.

In other words, the first alkaline oxidation step in agitated reactor CSTR 1 forms a first slurry of surface oxidized refractory ore particles and is followed by a first mechanical activation step in a mechanical activation means MA1. The first mechanical activation forms a first mechanically activated slurry. The first alkaline oxidation is fed by refractory ore particles.

The second alkaline oxidation step in agitated reactor CSTR 2 forms a second slurry of surface oxidized refractory ore particles. The second alkaline oxidation step is fed by the first mechanically activated slurry.

The third alkaline oxidation step in agitated reactor CSTR 3 forms a third slurry of surface oxidized refractory ore particles and is followed by a second mechanical activation step in a mechanical activation means MA 2. The second mechanical activation forms a second mechanically activated slurry. The third alkaline oxidation step is fed by the second slurry from the second alkaline oxidation step.

The fourth alkaline oxidation step in agitated reactor CSTR 4 forms a fourth slurry of surface oxidized refractory ore particles and is followed by a third mechanical activation step in a mechanical activation means MA 3. The third mechanical activation forms a third mechanically activated slurry. The fourth alkaline oxidation step is fed by the second mechanically activated slurry.

The fifth alkaline oxidation step in agitated reactor CSTR 5 forms a fifth slurry of surface oxidized refractory ore particles and is followed by a fourth mechanical activation step in a mechanical activation means MA 4. The fourth mechanical activation forms a fourth mechanically activated slurry. The fifth alkaline oxidation step is fed by the third mechanically activated slurry.

The sixth alkaline oxidation step in agitated reactor CSTR 6 forms a sixth slurry of surface oxidized refractory ore particles and is followed by a fifth mechanical activation step in a mechanical activation means MA 5. The fifth mechanical activation forms a fifth mechanically activated slurry. The sixth alkaline oxidation step is fed by the fourth mechanically activated slurry.

Figure 5 illustrates a variant embodiment compared to figure 3, where the number of agitated reactor in said series of n agitated reactor is not the same as the number of mechanical activation means of said series of x mechanical activation means. This arrangement can be carried out as such or at any location in the series and can be carried out as illustrated by construction or because one mechanical activation means needs to be maintained, as afore explained.

As it can be seen, in this arrangement, x is different from n, and lower than n. x = 5 while n = 6. Some alkaline oxidation step of said series of n alkaline oxidation steps (CSTR 1 to CSTR 6) being followed by a mechanical activation step of said series of x mechanical activation steps (MA 1 to MA 5). Each nth alkaline oxidation step forming a nth slurry of surface oxidized refractory ore particles and being fed from a (n - 1)th agitated reactor optionally to which a xth mechanically activated slurry with x < (n - 1) is returned.

In other words, the first alkaline oxidation step in agitated reactor CSTR 1 forms a first slurry of surface oxidized refractory ore particles and is followed by a first mechanical activation step in a mechanical activation means MA1. The first mechanical activation forms a first mechanically activated slurry. The first alkaline oxidation is fed by refractory ore particles and by said first mechanically activated slurry.

The second alkaline oxidation step in agitated reactor CSTR 2 forms a second slurry of surface oxidized refractory ore particles and is followed by a second mechanical activation step in a mechanical activation means MA 2. The second mechanical activation forms a second mechanically activated slurry. The second alkaline oxidation step is fed by the first slurry from the first agitated reactor and by the second mechanically activated slurry.

The third alkaline oxidation step in agitated reactor CSTR 3 forms a third slurry of surface oxidized refractory ore particles. The third alkaline oxidation step is fed by the second slurry from the second agitated reactor.

The fourth alkaline oxidation step in agitated reactor CSTR 4 forms a fourth slurry of surface oxidized refractory ore particles and is followed by a third mechanical activation step in a mechanical activation means MA 3. The third mechanical activation forms a third mechanically activated slurry. The fourth alkaline oxidation step is fed by the third slurry from the third agitated reactor and by the third mechanically activated slurry.

The fifth alkaline oxidation step in agitated reactor CSTR 5 forms a fifth slurry of surface oxidized refractory ore particles and is followed by a fourth mechanical activation step in a mechanical activation means MA 4. The fourth mechanical activation forms a fourth mechanically activated slurry. The fifth alkaline oxidation step is fed by the fourth slurry from the fourth agitated reactor and by the fourth mechanically activated slurry.

The sixth alkaline oxidation step in agitated reactor CSTR 6 forms a sixth slurry of surface oxidized refractory ore particles and is followed by a fifth mechanical activation step in a mechanical activation means MA 5. The fifth mechanical activation forms a fifth mechanically activated slurry. The sixth alkaline oxidation step is fed by the fifth slurry from the fifth agitated reactor and by the fifth mechanically activated slurry.

Figure 6 shows another arrangement in which a combination of several variants is illustrated.

In this embodiment, the first alkaline oxidation step in agitated reactor CSTR 1 forms a first slurry of surface oxidized refractory ore particles and is followed by a first mechanical activation step in a mechanical activation means MA1. The first mechanical activation forms a first mechanically activated slurry. The first alkaline oxidation is fed by refractory ore particles and the first mechanically activated slurry.

The second alkaline oxidation step in agitated reactor CSTR 2 forms a second slurry of surface oxidized refractory ore particles and is followed by a second mechanical activation step in a mechanical activation means MA 2. The second mechanical activation forms a second mechanically activated slurry. The second alkaline oxidation step is fed by the first slurry from the first agitated reactor and by the second mechanically activated slurry.

The third alkaline oxidation step in agitated reactor CSTR 3 forms a third slurry of surface oxidized refractory ore particles. The third alkaline oxidation step is fed by the second slurry from the second agitated reactor.

The fourth alkaline oxidation step in agitated reactor CSTR 4 forms a fourth slurry of surface oxidized refractory ore particles and is followed by a third mechanical activation step in a mechanical activation means MA 3. The third mechanical activation forms a third mechanically activated slurry. The fourth alkaline oxidation step is fed by the third slurry from the third agitated reactor.

The fifth alkaline oxidation step in agitated reactor CSTR 5 forms a fifth slurry of surface oxidized refractory ore particles. The fifth alkaline oxidation step is fed by the third mechanically activated slurry from the third mechanical activation means.

The sixth alkaline oxidation step in agitated reactor CSTR 6 forms a sixth slurry of surface oxidized refractory ore particles and is followed by a fourth mechanical activation step in a mechanical activation means MA 4. The fourth mechanical activation forms a fourth mechanically activated slurry. The sixth alkaline oxidation step is fed by the fifth slurry from the fifth agitated reactor.

The seventh alkaline oxidation step in agitated reactor CSTR 7 forms a seventh slurry of surface oxidized refractory ore particles and is followed by a fifth mechanical activation step in a mechanical activation means MA 5. The fifth mechanical activation forms a fifth mechanically activated slurry. The seventh alkaline oxidation step is fed by the fourth mechanically activated slurry from the fourth mechanical activation means.

According to the present invention, further possible separation steps can be foreseen between two agitated oxidation reactors or between one mechanical activation means and one agitated reactor, such as for example to remove a portion of said liquid phase and keeping a higher concentration in solid matter in a further alkaline oxidation step.

In the process according to the present invention, the conditions for alkaline oxidation process are preferably as follows:
▪ Pressure: atmospheric
▪ Solids concentration: 40 - 65% wt
▪ Temperature: 80 - 90°C
▪ Dissolved oxygen: 2 - 30mg/dm³ (preferably > 10 mg/dm³)
▪ pH control level: 11 with controlled lime addition

Lime agent addition into the oxidation reactors (CSTR) and stirred media (attritioning or mechanical activation) reactors can be achieved either by addition of dry quicklime (CaO - in powder form), lime hydrate (Ca(OH)₂- in powder form), or milk of lime also known as slaked lime slurry (a suspension of Ca(OH)₂). The lime addition rate would be dependent upon reaction demand and maintaining the pH at 11 in all alkaline oxidation reactors.

The heat for maintaining the temperature at or above 80°C is derived from the stirred media reactor as well as the exothermic chemical reactions and is sustained by managing the various heat balance factors of the processing circuit. These heat balance factors are specific to each application scenario and should be evaluated for each individual scenario as key inputs into the process design and selection of lime reagent type. The mass feed and subsequent rate of sulfide oxidation, as well the type of lime reagent used are particularly relevant to the heat balance.

The alkaline oxidation reaction, summarized by the overall reaction below, is exothermic (ΔH -1732kJ/mol @ 30°C) thereby contributing to heat generation in the agitated reactor.

4 FeS₂ + 8 Ca(OH)₂ + 15 O₂ + 14 H₂O = 4 Fe(OH)₃ + 8 CaSO₄.2H₂O

The hydration reaction of quicklime is also exothermic (ΔH - 65kJ/mol @ 30°C).

CaO + H₂O = Ca(OH)₂

The choice of lime reagent in the form of CaO, compared to already-hydrated Ca(OH)₂ may impact the heat balance, and may be used to manage the amount of heat in the process.

Oxygen utilization efficiency may also be improved by making use of a cascade of multiple oxidation reactors where the oxygen gas from one reactor is captured and introduced to a next reactor vessel in the cascade.

A key design element of the processing circuit is the extent of pyrite (or other sulfide mineral) oxidation to be targeted, as this is the key driver for determining the extent surface attrition, the extent of oxidation and therefore also the extent of lime and oxygen reagent requirement. In turn, these factors influence the process residence time and thereby the reactor size. These factors thus also influence the operational and capital costs of the processing circuit.

The optimal solids content is determined by optimal viscosity of the solids slurry. A too viscous slurry will reduce the efficiency of oxygen mass transfer and would negatively impact the efficiency of attritioning. The design of the process circuit should take into account that the that the solids content, and thus viscosity, of the slurry will increase through the circuit as a result of increased gypsum generation. The process design should take into consideration this increased viscosity and the optimal viscosity for oxygen transfer and attritioning or mechanical activation. Dilution process water may also be introduced along the process circuit to reduce the solids concentration and viscosity if required to maintain optimal conditions

The extent of gold extraction by cyanidation leaching (or other target method) should be determined as a function of extent of pyrite oxidation, as is known in the art and shown by way of example in the graph in figure 7.

The process circuit design, and in particular the extent of surface attritioning and oxidation is based on obtaining key process design parameters experimentally. Lime consumption (to maintain the pH at a setpoint of 11), can be used as an indicator or proxy of the extent of pyrite oxidation because of the correlation via the reaction mechanism:

4 FeS₂ + 8 Ca(OH)₂ + 15 O₂ + 14 H₂O = 4 Fe(OH)₃ + 8 CaSO₄.2H₂O

Once initial oxidation is commenced, using the concentrate feed at particle size as obtained from the mineral flotation process, lime and/or oxygen consumption is monitored (according to the above reaction) until a plateau is reached indicating the onset of the particle coating effect caused by gypsum and iron oxides. The mineral slurry is then transferred to a surface attritioning step to induce surface cleaning for a monitored period of time, that can be adjusted as required. Oxidation is again resumed in the same way until a lime/oxygen consumption plateau is reached. The stage of said series of at least 3 stages is repeated until no further oxidation occurs.

The lime consumption is correlated with the oxygen consumption via the reaction mechanism, which allows for the oxygen demand for the system to be calculated and the oxygen supply system to be designed for the oxidation reactors.

It should be understood that the present invention is not limited to the described embodiments and that variations can be applied insofar they remain within the scope of the claims.

## Claims

1. Alkaline sulfide oxidation process for treating refractory sulfide ore particles (1) enriched in a metal to be recovered wherein refractory sulfide ore particles are submitted to at least 3 stages in each of which said refractory sulfide ore particles are oxidized in surface by an oxidizing agent in an alkaline oxidation step (CSTR) in alkaline liquid phase and form an alkaline slurry containing surface oxidized refractory sulfide ore particles and in each of which said alkaline slurry is further submitted to a mechanical activation step (MA) for removing from the surface oxidized refractory sulfide ore particles at least partly a surface layer (2) containing oxidized matter, said mechanical activation forming a mechanically activated slurry containing oxidized matter (4), refractory sulfide ore particles from which oxidized matter has been removed (3), alkaline liquid phase and liberated metal to be recovered by further processing or returned to a next or a previous alkaline oxidation step, said alkaline liquid phase containing calcium hydroxide as alkaline agent and said refractory ore being gold refractory sulfide ore or concentrate such as gold-containing pyrite ore or concentrate, gold containing arsenopyrite ore or concentrate, copper sulfide ore or concentrate, nickel sulfide ore or concentrate, zinc sulfide ore or concentrate or cobalt sulfide ore or concentrate and combined metal sulfide ore or concentrate such as low grade copper-gold sulfide ores or concentrates, **characterized in that** said at least 3 stages comprising :
• a series of n alkaline oxidation steps in a series of n reactors (CSTR), each n^{th} alkaline oxidation forming a n^{th} alkaline slurry, where n is an integer comprised between 3 and 10, preferably between 4 and 8, more preferably between 5 and 7,
• a series of x mechanical activation steps (MR), each mechanical activation step being a mechanical activation of said n^{th} alkaline slurry, where x is an integer, equal or lower than n, and comprised between 3 and 10, preferably between 4 and 8, more preferably between 5 and 7,
wherein said series of n alkaline oxidation steps comprises at least:
• a first alkaline oxidation step where said refractory ore particles enriched in a metal to be recovered are fed into an agitated reactor and form a first alkaline slurry,
• at least one intermediate alkaline oxidation step fed with one alkaline slurry from a previous alkaline oxidation step,
• a last alkaline oxidation step being said n^{th} alkaline oxidation step fed with one alkaline slurry from a previous alkaline oxidation step,
said series of x mechanical activation steps comprising at least:
• a first mechanical activation step of said first alkaline slurry in a first mechanical activation means to form a first mechanically activated slurry,
• at least one intermediate mechanical activation step of a n^{th} alkaline slurry with said n^{th} alkaline slurry being comprised between a 2^{nd} alkaline slurry and a (x-1)^{th} alkaline slurry in a y^{th} mechanical activation means to form a y^{th} mechanically activated slurry,
• a last mechanical activation step of said last alkaline slurry being said x^{th} mechanical activation step in a x^{th} mechanical activation means to form a x^{th} mechanically activated slurry.

2. Alkaline sulfide oxidation process according to claim 1, wherein said added oxidizing agent is an oxidizing liquid, an oxidizing powder or an oxidizing gas, such as oxygen, ozone, peroxide, and their mixture

3. Alkaline sulfide oxidation process according to any of the claims 1 or 2, wherein said calcium hydroxide of said alkaline liquid phase is obtained by one or more addition of dry quicklime CaO, hydrated lime Ca(OH)₂, a milk of lime, said one or more addition being chosen amongst an addition upstream one n^{th} reactor, in one n^{th} reactor, upstream a x^{th} communition device, in a x^{th} mechanical activation means or combination thereof.

4. Alkaline sulfide oxidation process according to any of the claims 1 to 3, wherein each intermediate alkaline oxidation step is fed by a previous alkaline oxidation step, optionally via a mechanical activation step.

5. Alkaline sulfide oxidation process according to any of the claims 1 to 4, wherein at least one alkaline oxidation step, preferably more than one alkaline oxidation step and more preferably each alkaline oxidation step of said series of n alkaline oxidation steps is performed at atmospheric pressure.

6. Alkaline sulfide oxidation process according to any of the claims 1 to 5, wherein at least one alkaline oxidation step, preferably more than one alkaline oxidation step and more preferably each alkaline oxidation step of said series of n alkaline oxidation steps is performed at a temperature comprised between 70 and 100°C, preferably between 80 and 95°C, more preferably between 80°C and 90°C.

7. Alkaline sulfide oxidation process according to any of the claims 1 to 6, wherein at least one alkaline oxidation step, preferably more than one alkaline oxidation step and more preferably each alkaline oxidation step of said series of n alkaline oxidation steps is performed with a dissolved oxygen content comprised between 1 and 30 mg/dm³, preferably between 5 and 25 mg/dm³, more preferably higher than 10 mg/dm³ and in particular between 10 and 20 mg/dm³ of liquid phase.

8. Alkaline sulfide oxidation process according to any of the claims 1 to 7, wherein at least one alkaline oxidation step, preferably more than one alkaline oxidation step and more preferably each alkaline oxidation step of said series of n alkaline oxidation steps, is performed at a pH comprised between 10 and 12.5, preferably comprised between 10 and 12 and in particular between 10.5 and 11.5, said pH being controlled with a controlled lime addition of said alkaline agent.

9. Alkaline sulfide oxidation process according to any of the claims 1 to 8, wherein at least one alkaline oxidation step, preferably more than one alkaline oxidation step and more preferably each alkaline oxidation step of said series of n alkaline oxidation steps, is performed with solid content in the agitated reactor comprised between 10 and 70 wt%, preferably, between 20 and 70 wt%, more preferably between 35 and 70 wt%, more particularly between 40 and 65 wt% with respect to the total weight contained in said agitated reactor.

10. Alkaline sulfide oxidation process according to any of the claims 1 to 9, wherein at least one of mechanical step of said series of x mechanical activation step is performed in a vertical mill, a vertical stirred mill, a horizontal mill, an attritor, a stirred ball mill or a horizontal stirred mill.

11. Alkaline sulfide oxidation process according to any of the claims 1 to 10, wherein said refractory ore particles fed to said first alkaline oxidation step is beforehand crushed and grinded, for example milled typically down to a P₈₀ of 200 µm, preferably down to a P₈₀ of 150 µm forming a crushed and ground refractory ore particles.

12. Alkaline sulfide oxidation process according to claim 11, wherein said crushed and ground refractory ore particles are subjected to mineral flotation to produce a concentrate of refractory particles fed to said first alkaline oxidation step.

## Patentansprüche

1. Verfahren zur Oxidation von alkalischen Sulfiden zur Behandlung von refraktären Sulfiderzpartikeln (1), die in einem zu gewinnenden MetalII angereichert sind, wobei refraktäre Sulfiderzpartikel mindestens 3 Stufen unterzogen werden, in welchen jeweils die refraktären Sulfiderzpartikel in der Oberfläche durch ein Oxidationsmittel in einem alkalischen Oxidationsschritt (CSTR) in alkalischer Flüssigphase oxidiert werden und eine alkalische Aufschlämmung bilden, die oberflächenoxidierte refraktäre Sulfiderzpartikel enthält, und wobei in jeder die alkalische Aufschlämmung weiter einem mechanischen Aktivierungsschritt (MA) zum Entfernen mindestens teilweise einer Oberflächenschicht (2), die oxidierte Substanz enthält, von den oberflächenoxidierten refraktären Sulfiderzpartikeln unterzogen wird, wobei die mechanische Aktivierung eine mechanisch aktivierte Aufschlämmung bildet, die oxidierte Substanz (4), refraktäre Sulfiderzpartikel, von welchen oxidierte Substanz entfernt wurde (3), alkalische Flüssigphase und freigesetztes Metall enthält, die durch Weiterverarbeitung gewonnen oder zu einem nächsten oder einem vorangehenden alkalischen Oxidationsschritt zurückgeleitet wird, wobei die alkalische Flüssigphase Kalziumhydroxid als alkalisches Mittel enthält und das refraktäre Erz refraktäres Goldsulfiderz oder -konzentrat wie goldhaltiges Pyriterz oder -konzentrat, goldhaltiges Arsenopyriterz oder -konzentrat, Kupfersulfiderz oder -konzentrat, Nickelsulfiderz oder -konzentrat, Zinksulfiderz oder - konzentrat oder Kobaltsulfiderz oder -konzentrat und kombiniertes Metallsulfiderz oder - konzentrat wie Kupfer-Goldsulfideerze oder -konzentrate geringer Güte ist,
**dadurch gekennzeichnet, dass** die mindestens 3 Stufen umfassen:
- eine Reihe von n alkalischen Oxidationsschritten in einer Reihe von n Reaktoren (CSTR), wobei jede n-te alkalische Oxidation eine n-te alkalische Aufschlämmung bildet, wo n eine ganze Zahl zwischen 3 und 10, bevorzugt zwischen 4 und 8, bevorzugter zwischen 5 und 7 ist,
- eine Reihe von x mechanischen Aktivierungsschritten (MR), wobei jeder mechanische Aktivierungsschritt eine mechanische Aktivierung der n-ten alkalischen Aufschlämmung ist, wo x eine ganze Zahl gleich oder kleiner als n ist und zwischen 3 und 10, bevorzugt zwischen 4 und 8, bevorzugter zwischen 5 und 7 liegt,
wobei die Reihe von n alkalischen Oxidationsschritten mindestens Folgendes umfasst:
- einen ersten alkalischen Oxidationsschritt, wo die refraktären Erzpartikel, die in einem zu gewinnenden Metall angereichert sind, in einen Reaktor mit Rührwerk geleitet werden und eine erste alkalische Aufschlämmung bilden,
- mindestens einen alkalischen Oxidationszwischenschritt, dem eine alkalische Aufschlämmung von einem vorherigen alkalischen Oxidationsschritt zugeleitet wird,
- einen letzten alkalischen Oxidationsschritt, der der n-te alkalische Oxidationsschritt ist, dem eine alkalische Aufschlämmung von einem vorherigen alkalischen Oxidationsschritt zugeleitet wird,
wobei die Reihe von x mechanischen Aktivierungsschritten mindestens Folgendes umfasst:
- einen ersten mechanischen Aktivierungsschritt der ersten alkalischen Aufschlämmung in einem ersten mechanischen Aktivierungsmittel, um eine erste mechanisch aktivierte Aufschlämmung zu bilden,
- mindestens einen mechanischen Aktivierungszwischenschritt einer n-ten alkalischen Aufschlämmung, wobei die n-te alkalische Aufschlämmung zwischen einer 2. alkalischen Aufschlämmung und einer (x-1)-ten alkalischen Aufschlämmung liegt, in einem y-ten mechanischen Aktivierungsmittel, um eine y-te mechanisch aktivierte Aufschlämmung zu bilden,
- einen letzten mechanischen Aktivierungsschritt der letzten alkalischen Aufschlämmung, welche der x-te mechanische Aktivierungsschritt in einem x-ten mechanischen Aktivierungsmittel ist, um eine x-te mechanisch aktivierte Aufschlämmung zu bilden.

2. Verfahren zur Oxidation von alkalischen Sulfiden nach Anspruch 1, wobei das hinzugefügte Oxidationsmittel eine Oxidationsflüssigkeit, ein Oxidationspulver oder ein Oxidationsgas, wie Sauerstoff, Ozon, Peroxide und deren Gemisch, ist.

3. Verfahren zur Oxidation von alkalischen Sulfiden nach einem der Ansprüche 1 oder 2, wobei das Kalziumhydroxid der alkalischen Flüssigphase durch eine oder mehrere Zugaben von trockenem Branntkalk CaO, Löschkalk Ca(OH)₂, einer Kalkmilch erhalten wird, wobei die eine oder mehreren Zugaben aus einer Zugabe stromaufwärts eines n-ten Reaktors, in einem n-ten Reaktor, stromaufwärts einer x-ten Zerkleinerungsvorrichtung, in einem x-ten mechanischen Aktivierungsmittel oder einer Kombination davon ausgewählt ist.

4. Verfahren zur Oxidation von alkalischen Sulfiden nach einem der Ansprüche 1 bis 3, wobei jeder alkalische Oxidationszwischenschritt durch einen vorherigen alkalischen Oxidationsschritt beschickt wird, optional durch einen mechanischen Aktivierungsschritt.

5. Verfahren zur Oxidation von alkalischen Sulfiden nach einem der Ansprüche 1 bis 4, wobei mindestens ein alkalischer Oxidationsschritt, bevorzugt mehr als ein alkalischer Oxidationsschritt und bevorzugter jeder alkalische Oxidationsschritt der Reihe von n alkalischen Oxidationsschritten bei Atmosphärendruck durchgeführt wird.

6. Verfahren zur Oxidation von alkalischen Sulfiden nach einem der Ansprüche 1 bis 5, wobei mindestens ein alkalischer Oxidationsschritt, bevorzugt mehr als ein alkalischer Oxidationsschritt und bevorzugter jeder alkalische Oxidationsschritt der Reihe von n alkalischen Oxidationsschritten bei einer Temperatur zwischen 70 und 100°C, bevorzugt zwischen 80 und 95°C, bevorzugter zwischen 80°C und 90°C durchgeführt wird.

7. Verfahren zur Oxidation von alkalischen Sulfiden nach einem der Ansprüche 1 bis 6, wobei mindestens ein alkalischer Oxidationsschritt, bevorzugt mehr als ein alkalischer Oxidationsschritt und bevorzugter jeder alkalische Oxidationsschritt der Reihe von n alkalischen Oxidationsschritten mit einem gelösten Sauerstoffgehalt zwischen 1 und 30 mg/dm³, bevorzugt zwischen 5 und 25 mg/dm³, bevorzugter höher als 10 mg/dm³ und insbesondere zwischen 10 und 20 mg/dm³ Flüssigphase durchgeführt wird.

8. Verfahren zur Oxidation von alkalischen Sulfiden nach einem der Ansprüche 1 bis 7, wobei mindestens ein alkalischer Oxidationsschritt, bevorzugt mehr als ein alkalischer Oxidationsschritt und bevorzugter jeder alkalische Oxidationsschritt der Reihe von n alkalischen Oxidationsschritten bei einem pH-Wert zwischen 10 und 12,5, bevorzugt zwischen 10 und 12 und insbesondere zwischen 10,5 und 11,5 durchgeführt wird, wobei der pH-Wert mit einer kontrollierten Kalkzugabe des alkalischen Mittels kontrolliert wird.

9. Verfahren zur Oxidation von alkalischen Sulfiden nach einem der Ansprüche 1 bis 8, wobei mindestens ein alkalischer Oxidationsschritt, bevorzugt mehr als ein alkalischer Oxidationsschritt und bevorzugter jeder alkalische Oxidationsschritt der Reihe von n alkalischen Oxidationsschritten mit einem Feststoffgehalt in dem Reaktor mit Rührwerk zwischen 10 und 70 Gew.-%, bevorzugt, zwischen 20 und 70 Gew.-%, bevorzugter zwischen 35 und 70 Gew.-%, insbesondere zwischen 40 und 65 Gew.-% in Bezug auf das Gesamtgewicht, das in dem Reaktor mit Rührwerk enthalten ist, durchgeführt wird.

10. Verfahren zur Oxidation von alkalischen Sulfiden nach einem der Ansprüche 1 bis 9, wobei mindestens ein mechanischer Schritt der Reihe von x mechanischen Aktivierungsschritten in einer vertikalen Mühle, einer Mühle mit vertikalem Rührwerk, einer horizontalen Mühle, einer Reibungsmühle, einer Kugelmühle mit Rührwerk oder einer Mühle mit horizontalem Rührwerk durchgeführt wird.

11. Verfahren zur Oxidation von alkalischen Sulfiden nach einem der Ansprüche 1 bis 10, wobei die refraktären Erzpartikel, die dem ersten alkalischen Oxidationsschritt zugeleitet werden, zuvor zerkleinert oder gemahlen werden, zum Beispiel auf typischerweise P₈₀ von 200 µm, bevorzugt auf P₈₀ von 150 µm gemahlen werden, um zerkleinerte und gemahlene refraktäre Erzpartikel zu bilden.

12. Verfahren zur Oxidation von alkalischen Sulfiden nach Anspruch 11, wobei die zerkleinerten und gemahlenen refraktären Erzpartikel einer Mineralflotation unterzogen werden, um ein Konzentrat von refraktären Partikeln zu erzeugen, die dem ersten alkalischen Oxidationsschritt zugeleitet werden.

## Revendications

1. Procédé d'oxydation de sulfure alcalin pour le traitement de particules de minerai de sulfure réfractaire (1) enrichies en un métal à récupérer dans lequel les particules de minerai de sulfure réfractaire sont soumises à au moins 3 stades dans chacun desquels lesdites particules de minerai de sulfure réfractaire sont oxydées en surface par un agent oxydant dans une étape d'oxydation alcaline (CSTR) dans une phase liquide alcaline et forment une suspension alcaline contenant des particules de minerai de sulfure réfractaire oxydées en surface et dans chacun desquels ladite suspension alcaline est en outre soumise à une étape d'activation mécanique (MA) pour éliminer, des particules de minerai de sulfure réfractaire oxydées en surface, au moins partiellement une couche de surface (2) contenant de la matière oxydée, ladite activation mécanique formant une suspension activée mécaniquement contenant de la matière oxydée (4), des particules de minerai de sulfure réfractaire dont la matière oxydée a été éliminée (3), une phase liquide alcaline et un métal libéré à récupérer par traitement supplémentaire ou à renvoyer à une étape d'oxydation alcaline suivante ou précédente, ladite phase liquide alcaline contenant de l'hydroxyde de calcium en tant qu'agent alcalin et ledit minerai réfractaire étant un minerai ou un concentré de sulfure réfractaire d'or tel qu'un minerai ou un concentré de pyrite contenant de l'or, un minerai ou un concentré d'arsénopyrite contenant de l'or, un minerai ou un concentré de sulfure de cuivre, un minerai ou un concentré de sulfure de nickel, un minerai ou un concentré de sulfure de zinc ou un minerai ou un concentré de sulfure de cobalt et un minerai ou un concentré de sulfure métallique combiné tel que des minerais ou des concentrés de sulfure de cuivre-or de qualité inférieure, **caractérisé en ce que** lesdits au moins 3 stades comprennent:
• une série de n étapes d'oxydation alcaline dans une série de n réacteurs (CSTR), chaque n^{ième} oxydation alcaline formant une n^{ième} suspension alcaline, où n est un nombre entier compris entre 3 et 10, de préférence entre 4 et 8, de manière davantage préférée entre 5 et 7,
• une série de x étapes d'activation mécanique (MR), chaque étape d'activation mécanique étant une activation mécanique de ladite n^{ième} suspension alcaline, où x est un nombre entier, inférieur ou égal à n, et compris entre 3 et 10, de préférence entre 4 et 8, de manière davantage préférée entre 5 et 7,
où ladite série de n étapes d'oxydation alcaline comprend au moins :
• une première étape d'oxydation alcaline où lesdites particules de minerai réfractaire enrichies en un métal à récupérer sont apportées à un réacteur agité et forment une première suspension alcaline,
• au moins une étape d'oxydation alcaline intermédiaire recevant une suspension alcaline provenant d'une étape d'oxydation alcaline précédente,
• une dernière étape d'oxydation alcaline étant ladite n^{ième} étape d'oxydation alcaline recevant une suspension alcaline provenant d'une étape d'oxydation alcaline précédente,
ladite série de x étapes d'activation mécanique comprenant au moins :
• une première étape d'activation mécanique de ladite première suspension alcaline dans un premier moyen d'activation mécanique pour former une première suspension activée mécaniquement,
• au moins une étape d'activation mécanique intermédiaire d'une n^{ième} suspension alcaline avec ladite n^{ième} suspension alcaline étant comprise entre une 2^{ième} suspension alcaline et une (x-1)^{ième} suspension alcaline dans un y^{ième} moyen d'activation mécanique pour former une y^{ième} suspension activée mécaniquement,
• une dernière étape d'activation mécanique de ladite dernière suspension alcaline étant ladite x^{ième} étape d'activation mécanique dans un x^{ième} moyen d'activation mécanique pour former une x^{ième} suspension activée mécaniquement.

2. Procédé d'oxydation de sulfure alcalin selon la revendication 1, dans lequel ledit agent oxydant ajouté est un liquide oxydant, une poudre oxydante ou un gaz oxydant, tel que de l'oxygène, de l'ozone, du peroxyde, et leur mélange

3. Procédé d'oxydation de sulfure alcalin selon l'une quelconque des revendications 1 ou 2, dans lequel ledit hydroxyde de calcium de ladite phase liquide alcaline est obtenu par un ou plusieurs ajouts de chaux vive CaO sèche, de chaux hydratée Ca(OH)₂, d'un lait de chaux, lesdits un ou plusieurs ajouts étant choisis parmi un ajout en amont d'un n^{ième} réacteur, dans un n^{ième} réacteur, en amont d'un x^{ième} dispositif de comminution, dans un x^{ième} moyen d'activation mécanique ou une combinaison de ceux-ci.

4. Procédé d'oxydation de sulfure alcalin selon l'une quelconque des revendications 1 à 3, dans lequel chaque étape d'oxydation alcaline intermédiaire est alimentée par une étape d'oxydation alcaline précédente, optionnellement par l'intermédiaire d'une étape d'activation mécanique.

5. Procédé d'oxydation de sulfure alcalin selon l'une quelconque des revendications 1 à 4, dans lequel au moins une étape d'oxydation alcaline, de préférence plus d'une étape d'oxydation alcaline et de manière davantage préférée chaque étape d'oxydation alcaline de ladite série de n étapes d'oxydation alcaline est effectuée à pression atmosphérique.

6. Procédé d'oxydation de sulfure alcalin selon l'une quelconque des revendications 1 à 5, dans lequel au moins une étape d'oxydation alcaline, de préférence plus d'une étape d'oxydation alcaline et de manière davantage préférée chaque étape d'oxydation alcaline de ladite série de n étapes d'oxydation alcaline est effectuée à une température comprise entre 70 et 100 °C, de préférence entre 80 et 95 °C, de manière davantage préférée entre 80 °C et 90 °C.

7. Procédé d'oxydation de sulfure alcalin selon l'une quelconque des revendications 1 à 6, dans lequel au moins une étape d'oxydation alcaline, de préférence plus d'une étape d'oxydation alcaline et de manière davantage préférée chaque étape d'oxydation alcaline de ladite série de n étapes d'oxydation alcaline est effectuée avec une teneur en oxygène dissous comprise entre 1 et 30 mg/dm³, de préférence entre 5 et 25 mg/dm³, de manière davantage préférée supérieure à 10 mg/dm³ et en particulier entre 10 et 20 mg/dm³ de phase liquide.

8. Procédé d'oxydation de sulfure alcalin selon l'une quelconque des revendications 1 à 7, dans lequel au moins une étape d'oxydation alcaline, de préférence plus d'une étape d'oxydation alcaline et de manière davantage préférée chaque étape d'oxydation alcaline de ladite série de n étapes d'oxydation alcaline, est effectuée à un pH compris entre 10 et 12,5, de préférence compris entre 10 et 12 et en particulier entre 10,5 et 11,5, ledit pH étant contrôlé par un ajout de chaux contrôlé dudit agent alcalin.

9. Procédé d'oxydation de sulfure alcalin selon l'une quelconque des revendications 1 à 8, dans lequel au moins une étape d'oxydation alcaline, de préférence plus d'une étape d'oxydation alcaline et de manière davantage préférée chaque étape d'oxydation alcaline de ladite série de n étapes d'oxydation alcaline, est effectuée avec une teneur en solides dans le réacteur agité comprise entre 10 et 70 % en poids, de préférence, entre 20 et 70 % en poids, de manière davantage préférée entre 35 et 70 % en poids, plus particulièrement entre 40 et 65 % en poids par rapport au poids total contenu dans ledit réacteur agité.

10. Procédé d'oxydation de sulfure alcalin selon l'une quelconque des revendications 1 à 9, dans lequel au moins l'une des étapes mécaniques de ladite série de x étapes d'activation mécanique est effectuée dans un broyeur vertical, un broyeur agité vertical, un broyeur horizontal, un attritionneur, un broyeur à boulets agité ou un broyeur agité horizontal.

11. Procédé d'oxydation de sulfure alcalin selon l'une quelconque des revendications 1 à 10, dans lequel lesdites particules de minerai réfractaire apportées à ladite première étape d'oxydation alcaline sont préalablement concassées et broyées, par exemple réduites typiquement jusqu'à un P₈₀ de 200 µm, de préférence jusqu'à un P₈₀ de 150 µm formant des particules de minerai réfractaire concassées et broyées.

12. Procédé d'oxydation de sulfure alcalin selon la revendication 11, dans lequel lesdites particules de minerai réfractaire concassées et broyées sont soumises à une flottation minérale pour produire un concentré de particules réfractaires apportées à ladite étape d'oxydation alcaline.
